(19) Europäisches Patentamt
European Patent Office
Office européen des brevets

(11) **EP 0 660 984 B1**

(12) **EUROPEAN PATENT SPECIFICATION**

(45) Date of publication and mention
of the grant of the patent:
**27.11.2002 Bulletin 2002/48**

(21) Application number: **94921024.9**

(22) Date of filing: **15.07.1994**

(51) Int Cl.⁷: **H04B 10/08**, G01M 11/00

(86) International application number:
**PCT/GB94/01530**

(87) International publication number:
**WO 95/002933 (26.01.1995 Gazette 1995/05)**

(54) **PATH INTEGRITY PROVING IN OPTICAL COMMUNICATIONS SYSTEMS**

STRECKENINTEGRITÄTSPRÜFUNG IN EINEM OPTISCHEN ÜBERTRAGUNGSSYSTEM

MISE EN EVIDENCE DE L'INTEGRITE DE TRAJET DANS LES SYSTEMES DE TELECOMMUNICATION OPTIQUE

(84) Designated Contracting States:
**DE ES FR IT**

(30) Priority: **15.07.1993 GB 9314942**

(43) Date of publication of application:
**05.07.1995 Bulletin 1995/27**

(73) Proprietor: **Marconi Communications Limited Coventry, CV3 1HJ (GB)**

(72) Inventor: **STEWART, William, James
Blakesley Northamptonshire NN12 8RE (GB)**

(74) Representative: **Branfield, Henry Anthony et al
Marconi Intellectual Property
Waterhouse Lane
Chelmsford, Essex CM1 2QX (GB)**

(56) References cited:
**EP-A- 0 486 931        EP-A- 0 592 690
WO-A-90/06498         WO-A-91/15906**

**Description**

This invention relates to optical communication systems.

More particularly the invention relates to methods and apparatus for proving the integrity of optical paths in an optical communication system.

A known such method is to build into terminal equipment at the end of each path the ability to respond in predetermined manner to a diagnostic optical signal transmitted thereto from the other end of the path, detection of the response at the other end being taken as proof of the path integrity. - One difficulty which arises with such a method is that it may not be possible to distinguish between a failure in the terminal equipment and an optical path failure.

One solution to this difficulty is to provide a passive device in the form of an optical reflector means at the end of each path, each reflector means being tuned to a different optical frequency, detection of the reflection of a diagnostic optical signal of that frequency being taken as proof of the integrity of that path. The problem with this solution is that it uses too much bandwidth, especially because of temperature stability limitations.

It is an object of the present invention to provide a method and apparatus whereby this problem is overcome.

In European Patent Application No. 0592690-A1 is described a method for easily identifying optical lines without error irrespective of the lengths of the lines. A plurality of reflective parts are provided as an identification mark on each optical line. The combination of the correlative positions of the plural reflective parts of an optical line is different from others. The correlative positions of the reflective parts of a line are determined on the basis of the reflected light of the inspecting light incident upon the optical line. According to the results of the determination, the optical line is identified. More specifically, when inspecting light is incident on the end of an optical line, the light is reflected by the plural reflective parts which function as an identification mark, and it is caused to return to the incident end. Since the combinations of the correlative positions of the reflective parts are different from each other, the correlative positions of the plural reflective parts of an optical line are found by measuring the differences between the lengths of the optical paths of the optical lines from the reflective parts by use of an interferometer or by measuring the differences in the times for the reflected light to return from the reflective parts. The optical lines can be identified on the basis of the results of such measurement.

According to the present invention there is provided a method for proving the integrity of optical paths in an optical communication system comprising: transmitting an amplitude modulated diagnostic optical signal along each path from one end; producing at the other end of each said path a plurality of echoes of said diagnostic signal; and detecting at said one end said echoes of said diagnostic signal; the diagnostic signal in each path having the same optical frequency but the time spacing of the echoes in each path being different,wherein the modulation components of the echoes are in-phase at a different modulating frequency for each path.

According to a second aspect of the invention there is provided an apparatus for proving the integrity of optical paths in an optical communication system comprising: transmitting means for transmitting an amplitude modulated diagnostic signal of a predetermined optical frequency along each said path from one end thereof; echo producing means for producing time-spaced echoes of the diagnostic signal at the other end of each path, the time spacing of the echoes produced in each path being different, and detection means for detecting said time-spaced echoes at said one end of each path, wherein the modulation components of the echoes are in-phase at a different modulating frequency for each path.

In one such particular embodiment the echoes are produced by a pair of strong reflector means spaced by a distance equal to half the wavelength of the modulating frequency, the reflector means nearer the source of the diagnostic signal being partly transmissive so that the pair of reflectors operate in the manner of a Fabry-Perot resonator tuned to the modulating frequency. In such an arrangement the reflector means are preferably tuned to the optical frequency of the diagnostic signal.

In another such particular embodiment of the invention the echoes are produced by a closed optical loop of length equal to the wavelength of the modulating frequency or a multiple thereof.

Two methods in accordance with the invention and apparatus for carrying out the methods will now be described, by way of example, with reference to the accompanying drawings in which:

Figure 1 is a schematic diagram of a multi-terminal optical fibre communication system;

Figure 2 is a schematic diagram of reflector means at the terminal end of a path of the system of Figure 1 in a first embodiment of the invention;

Figures 3A, 3B and 4 illustrate the waveforms of reflection signals produced by the reflector means of Figure 2;

Figure 5 illustrates an alternative arrangement of the reflector means of Figure 2;

Figures 6 and 7 illustrate alternative arrangements of the reflector means of Figure 2 in a two-fibre optical path system; and

Figures 8 and 9 illustrate an alternative form of the reflector means in the first embodiment of the invention;

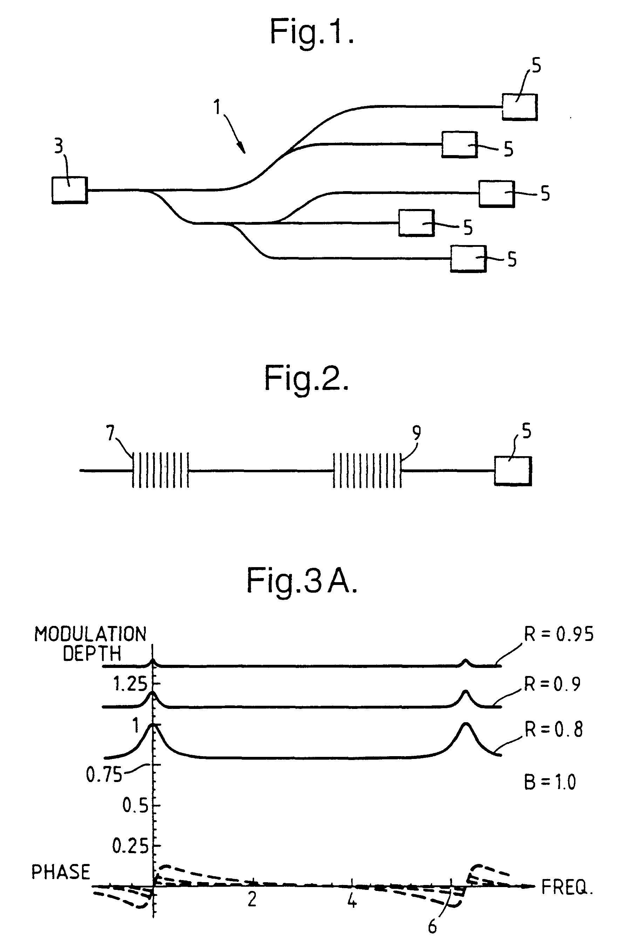

Referring to Figure 1, the system comprises a fibre optic network 1 which connects a main terminal 3 via the network to each of a number of satellite terminals 5.

In order to prove the integrity of the paths between the main terminal 3 and each of the terminals 5 the terminal 3 transmits an optical diagnostic signal.

In the first method to be described the diagnostic signal comprises a signal of a predetermined optical frequency, e.g. of the order of $2 \times 10^{14}$Hz, which is amplitude modulated at a frequency which is swept linearly through a band of frequencies, typically in the range from 100MHz to 1GHz.

Referring to Figure 2, at the terminal end of each path there is provided a device for producing time spaced echoes in response to the diagnostic signal comprising a pair of spaced strong reflector means 7 and 9. Each of the reflector means 7, 9 suitably comprises an optical grating structure, as illustrated in Figure 2, the spacing of the lines in each grating being half the wavelength of the predetermined optical frequency of the diagnostic signal so that the grating operates as a reflector tuned to that frequency.

The two reflector means 7, 9 in each path are spaced from one another by a different distance for each path such that the double pass delay between the reflector means in each path has a different value equal to the period of a different frequency in the modulation frequency band.

The sum of the reflections of the diagnostic signal produced by the reflector means 7, 9 in any particular path can be calculated using a Fabry-Perot type calculation, assuming the diagnostic signal source to be incoherent and 100% modulation depth, as follows:

Taking the modulation envelope of the transmitted diagnostic signal at the reflector means 7 nearer the main terminal 3 to be given by Exp i(wt -kz) +1, where t is time, w is the angular frequency of the modulating signal and kz is a phase factor, the sum of the reflections is given by:

$$R \{Exp[i(wt - kz)] + 1\}$$

$$+ T^2B \{Exp[i(wt - kz - kL)] + 1\}$$

$$+ RT^2B^2 \{Exp [i(wt - kz - 2kL)] + 1\}$$

$$+ R^2T^2B^3 \{Exp[i(wt - kz - 3kL)] + 1\}$$

$$+ ... \tag{1}$$

where L is the double pass delay, R is the reflectivity of the reflector means 7, T(= 1-R) is the transmissivity of the reflector means 7, and B is the reflectivity of the reflector means 9.

The sum (1) can be split into a DC component given by

$$R + T^2B + RT^2B^2 + R^2T^2B^3 + .... \tag{2}$$

and an alternating component given by

$$Exp [i(wt - kz)]\{R + T^2B \, Exp[i(-kL)] + RT^2B^2 Exp[i(-2kL)]$$

$$+ R^2T^2B^3 \, Exp[i(-3kL)] + ...\} \tag{3}$$

which becomes

$$R - T^2/R + T^2/R\{1/(1 - \{RB \, Exp [i(-kL)]\})\} \tag{4}$$

and which is equal to the DC component (2) when L = 0

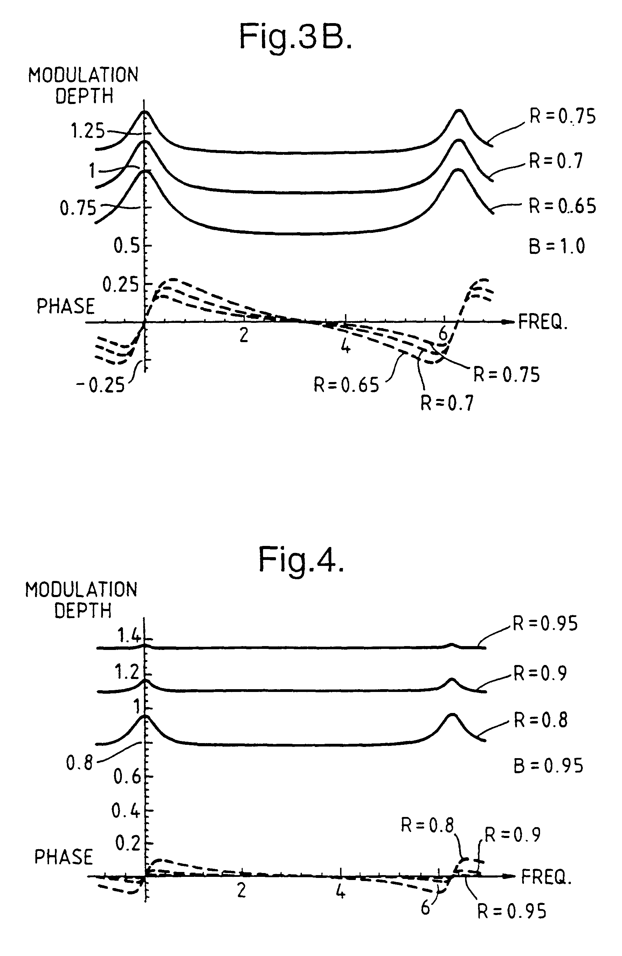

Figures 3A and 3B illustrate the variation of the depth of modulation and the phase of the sum of the reflections with variation of modulating frequency for different values of the reflectivity R and a value of B of one. In the Figures 3A, 3B the depth of modulation curves are vertically spaced, for the sake of clarity but, in fact, all the curves peak at the same value (i.e. at a value at which the depth of modulation of the sum of the reflections is equal to the depth of modulation of the diagnostic signal) as shown for the curves for reflectivities of 0.8 and 0.65.

Figure 4 shows similar curves for reflectivities R of reflector means 7 of values 0.95, 0.90 and 0.80 and a reflectivity B of reflection means 9 of value 0.95, the peak value of these curves, of course, being less than in Figure 3A.

As can be seen from Figures 3 and 4, the depth of modulation of the sum of the reflections periodically peaks in each curve with increasing frequency, the peaks occurring at values of the modulating frequency for which the period of the modulating frequency is an integral multiple of L, i.e. at values of the modulating frequency for which the spacing of the reflector means 7 and 9 is equal to an integral multiple of half the wavelength of the modulating frequency.

The sharpness of the modulation depth peaks decreases with decreasing reflectivity R whilst the amplitude of the peaks increases with decreasing reflectivity R and decreases with decreasing reflectivity B. With appropriate choice of R and B, up to about fifty different peaks may be distinguished, i.e. up to fifty different modulating frequencies may be identified.

The integrity of any particular path in the system can thus be proved by determining whether the depth of modulation of the sum of the reflected signals produced at the main terminal 3 in response to transmission from terminal 3 of a diagnostic signal having a modulation frequency corresponding to the spacing of the reflector means 7 and 9 at the terminal end of that path exceeds a predetermined value.

In practice, proving path integrity will involve detecting and analysing, at the main terminal 3, the reflection signals produced by sweeping the modulating frequency of the diagnostic signal through the above-mentioned modulating frequency band, and thereby determining those modulating frequencies present in the reflection signals for which the depth of modulation of the reflected signals exceeds the predetermined value. Each such modulating frequency corresponds to a different path of the system, and a determination that the depth of modulation of the reflected signals for a particular modulating frequency exceeds the predetermined value proves the integrity of the corresponding path.

As shown in Figures 3 and 4, in addition to the depth of modulation of the sum of the reflections exhibiting peaks at particular modulating frequencies dependent on the spacing of reflection means 7 and 9, the rate of change of the phase of the sum of the reflections also exhibits peaks at particular modulating frequencies. Hence, in order to prove path integrities, instead of determining the modulating frequencies at which the depth of modulation of the reflection signals exceeds a predetermined value, the modulating frequencies at which the rate of change of phase of the reflection signals with change of modulating frequency exceeds a predetermined value may be determined.

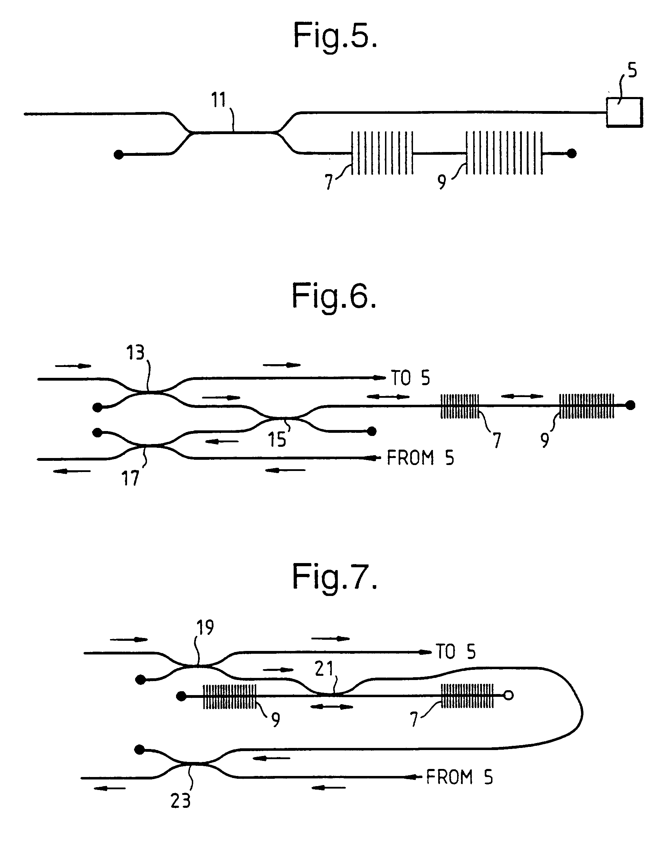

It will be appreciated that if the optical frequency chosen for the diagnostic signal is outside the range of optical frequencies to be received and/or transmitted by the terminal means 5, the reflector means 7, 9 associated with a terminal S may be positioned directly in the optic fibre path connecting the terminal 5 into the system, as shown in Figure 2. However, to avoid this restriction the reflector means 7, 9 may be coupled into the terminal path via a 3db coupler 11 as illustrated in Figure 5.

Where it is desired that each terminal 5 is connected by separate receive and transmit fibres, the reflector means 7 and 9 may be connected in various configurations. One such configuration is shown in Figure 6 where 13, 15 and 17 are 3db couplers. A second such configuration is shown in Figure 7 where 19, 21 and 23 are 3db couplers.

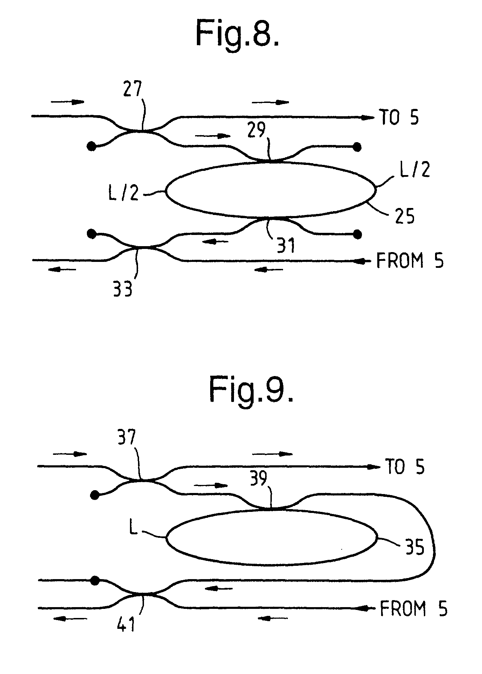

In the above described embodiments, instead of using spaced reflector means 7, 9 to produce the required time-spaced echoes of the diagnostic signal, the echoes may be produced by closed fibre loops of a length such as to produce the required delay L. Figure 8 illustrates one such arrangement, functionally corresponding to the arrangement of Figure 6, using a fibre loop 25 and four 3db couplers 27, 29, 31 and 33, and Figure 9 illustrates a second such arrangement, functionally corresponding to the arrangement of Figure 7, using a fibre loop 35 and three 3db couplers 37, 39 and 41.

It will be appreciated that arrangements using closed optical fibre loops, as illustrated in Figures 8 and 9 are broadband devices in the sense that they operate over a wide band of optical frequency without modification.

## Claims

1. A method for proving the integrity of optical paths in an optical communication system comprising: transmitting an amplitude modulated diagnostic optical signal along each path from one end; producing at the other end of each said path a plurality of echoes of said diagnostic signal; and detecting at said one end said echoes of said diagnostic signal; the diagnostic signal in each path having the same optical frequency but the time spacing of the echoes in each path being different, **characterized in that** the modulation components of the echoes are in-phase at a different modulating frequency for each path.

2. An apparatus for proving the integrity of optical paths in an optical communication system comprising: transmitting means (3) for transmitting an amplitude modulated diagnostic signal of a predetermined optical frequency along each said path from one end thereof; echo producing means (7, 9) for producing time-spaced echoes of the diagnostic signal at the other end of each path, the time spacing of the echoes produced in each path being different, and detection means (3) for detecting said time-spaced echoes at said one end of each path **characterised in that** the modulation components of the echoes are in-phase at a different modulating frequency for each path

3. A method or apparatus according to Claim 1 or 2 wherein the echoes are produced by a pair of strong reflector means (7, 9) spaced by a distance equal to half the wavelength of the modulating frequency, the reflector means nearer the source of the diagnostic signal being partly transmissive so that the pair of reflector means operate in the manner of a Fabry-Perot resonator tuned to the modulating frequency.

4. A method or apparatus according to Claim 3, wherein said reflector means are tuned to the optical frequency of the diagnostic signal.

5. A method or apparatus according to Claim 4 wherein said reflector means comprise optical grating structures.

6. A method or apparatus according to Claim 1 or 2, wherein the echoes are produced by a closed optical loop of length equal to the wavelength of the modulation frequency or a multiple thereof.

**Patentansprüche**

1. Verfahren zum Nachweis der Integrität optischer Pfade in einem optischen Kommunikationssystem, umfassend: Senden eines amplitudenmodulierten, optischen Diagnosesignals entlang jeden Pfades von einem Ende aus, Erzeugen einer Mehrzahl von Echos des Diagnosesignals am anderen Ende jedes der Pfade und Erfassen der Echos des Diagnosesignals an einem Ende, wobei das Diagnosesignal in jedem Pfad dieselbe optische Frequenz aufweist, die Zeitabstände der Echos in jedem Pfad aber unterschiedlich sind, **dadurch gekennzeichnet, dass** die Modulationskomponenten der Echos für jeden Pfad bei unterschiedlichen Modulationsfrequenzen in Phase sind.

2. Vorrichtung zum Nachweis der Integrität optischer Pfade in einem optischen Kommunikationssystem, umfassend: Sendemittel (3) zum Senden eines amplitudenmodulierten Diagnosesignals einer vorgegebenen optischen Frequenz entlang jedes der Pfade von einem seiner Enden aus, Echoerzeugungsmittel (7,9) zum Erzeugen zeitversetzter Echos des Diagnosesignals am anderen Ende jedes Pfades, wobei der Zeitversatz der erzeugten Echos in jedem Pfad unterschiedlich ist, und Erfassungsmittel (3) zum Erfassen der zeitversetzten Echos an dem ersten Ende jedes Pfades, **dadurch gekennzeichnet, dass** die Modulationskomponenten der Echos für jeden Pfad bei unterschiedlichen Modulationsfrequenzen in Phase sind.

3. Verfahren oder Vorrichtung nach Anspruch 1 oder 2, wobei die Echos von einem Paar starker Reflektormittel (7,9) erzeugt werden, die um einen Abstand gleich der halben Wellenlänge der Modulationsfrequenz voneinander beabstandet sind, von denen diejenigen Reflektormittel, die näher zur Quelle des Detektionssignals gelegen sind, teilweise durchlässig sind, sodass das Paar von Reflektormitteln wie ein auf die Modulationsfrequenz abgestimmter Fabry-Perot-Resonator arbeitet.

4. Verfahren oder Vorrichtung nach Anspruch 3, wobei die Reflektormittel auf die optische Frequenz des Diagnosesignals abgestimmt sind.

5. Verfahren oder Vorrichtung nach Anspruch 4, wobei die Reflektormittel optische Gitterstrukturen umfassen.

6. Verfahren oder Vorrichtung nach Anspruch 1 oder 2, wobei die Echos von einer geschlossenen optischen Schleife einer Länge gleich der Wellenlänge der Modulationsfrequenz oder eines Vielfachen davon erzeugt werden.

**Revendications**

1. Procédé destiné à démontrer l'intégrité des trajets optiques dans un système de communication optique comprenant les étapes consistant à : transmettre un signal optique de diagnostic d'amplitude modulée sur chaque trajet à partir d'une extrémité ; produire à l'autre extrémité de chacun desdits trajets une pluralité d'échos dudit signal de diagnostic, le signal de diagnostique sur chaque trajet ayant la même fréquence optique mais l'intervalle de temps des échos sur chaque trajet étant différent, moyennant quoi les composants de modulation des échos sont en phase à une fréquence de modulations différente pour chaque trajet.

2.  Procédé destiné à démontrer l'intégrité des trajets optiques dans un système de communication optique comprenant : des moyens de transmission (3) pour transmettre un signal de diagnostique modulé en amplitude d'une fréquence optique prédéterminée sur chaque trajet d'une extrémité de celui-ci ; des moyens de production d'échos (7, 9) pour produire des échos espacés dans le temps d'un signal de diagnostic à l'autre extrémité de chaque trajet, l'espacement de temps des échos produit dans chaque trajet étant différent et des moyens de détection (3) détectant lesdits échos espacés dans le temps à ladite une extrémité de chaque trajet, **caractérisé en ce que** les composants de modulation des échos sont en phase à différentes fréquences de modulation pour chaque trajet.

3.  Procédé ou appareil selon la revendication 1 ou 2, dans lequel les échos sont produits par un couple de moyens de puissant réflecteur (7, 9) espacés à une distante égale à la moitié de la longueur d'onde de la fréquence de modulation, le moyen de réflecteur le plus proche de la source du signal de diagnostic étant partiellement transmissif de manière à ce que le couple de moyens de réflecteur fonctionne comme un résonateur Fabry-Perot réglé sur une fréquence de modulation.

4.  Procédé ou appareil selon la revendication 3, dans lequel lesdits moyens de réflecteur sont réglés sur la fréquence optique du signal de diagnostic.

5.  Procédé ou appareil selon la revendication 4 dans lequel lesdits moyens de réflecteur comprennent des structures de grille optique.

6.  Procédé ou appareil selon la revendication 1 ou 2, dans lequel les échos sont produits par une boucle optique fermée d'une longueur égale à la longueur d'onde de la fréquence de modulation ou un multiple de celle-ci.

# Fig.1.

# Fig.2.

# Fig.3 A.

# Fig.3B.

MODULATION
DEPTH

R = 0.75
R = 0.7
R = 0.65

B = 1.0

PHASE

FREQ.

R = 0.65
R = 0.7
R = 0.75

# Fig.4.

MODULATION
DEPTH

R = 0.95
R = 0.9
R = 0.8

B = 0.95

PHASE

R = 0.8
R = 0.9
R = 0.95

FREQ.

8

# Fig.5.

# Fig.6.

# Fig.7.

# Fig.8.

# Fig.9.